# EUROPEAN PATENT SPECIFICATION

(11) **EP 2 310 763 B1**
(45) Date of publication and mention of the grant of the patent: **23.11.2016**
(21) Application number: 08774066.8
(22) Date of filing: 11.06.2008
(51) Int. Cl.: F24J 2/05, F24J 2/50, F24J 2/46, F04B 37/02

(54) **EVACUATED SOLAR PANEL WITH A NON EVAPORABLE GETTER PUMP**
EVAKUIERTES SONNENPANEEL MIT NICHT VERDAMPFBARER GETTER-PUMPE
PANNEAU SOLAIRE SOUS VIDE AVEC POMPE À ADSORPTION CHIMIQUE NON ÉVAPORABLE

(43) Date of publication of application: 20.04.2011
(73) Proprietor: SRB Energy Research SÀRL, 1205 Geneva (CH); European Organization For Nuclear Research Cern, 1211 Geneva 23 (CH)
(72) Inventor: BENVENUTI, Cristoforo, CH-1295 Tannay (CH)
(74) Representative: Boussicault, Fabien
(86) International application number: PCT/EP2008/057281
(87) International publication number: WO 2009/149751

(56) References cited:
- EP-A- 0 633 420
- WO-A-2005/075900
- FR-A- 2 492 956
- GB-A- 2 089 024
- JP-A- 3 145 580
- JP-A- 9 204 994
- JP-A- S5 719 550
- JP-A- 2004 108 747
- US-A- 4 508 104
- US-A1- 2004 134 484

## Description

The present invention relates to an evacuated solar panel with a Getter pump, in particular according to the invention the getter pump is a Non-Evaporable Getter (NEG) pump.

As known in the art, NEG pumps are widely used to maintain the vacuum inside sealed evacuated devices.

In the NEG pumps the gas molecules are adsorbed on the surface of the getter material, resulting in NEG saturation.

To avoid saturation by the pumped gases and, thus, loss of the pumping effect (i.e. capability of adsorbing gases molecules) NEG must be heated to help the adsorbed gases molecules to diffuse from the surface of the getter pump within the volume of the same.

Heating may be applied continuously or intermittently for instance by means of electric heating.

Nevertheless such electric heaters require electric vacuum feedthroughs, which add costs to the device and reduce its reliability.

JP 2004108747 A describes a solar heat collecting device having the plane heat collecting plate for receiving the heat of sunlight comprises a heat collector consisting of the heat collecting plate and a circular case mounted on the heat collecting plate with air tightness and having a steam generation chamber formed inside. A fabric water supply film is attached to the heat collecting plate in the steam generation chamber so that the heating medium in the steam generation chamber evaporate by contacting with the heat collecting plate through the water supply film.

JP 5719550 A discloses a vacuum glass tube type heat collecting tube comprising a heat collecting plate and a nonvolatile getter secured tightly to a part of the heat collecting plate. The nonvolatile getter comprises an electrically conductive container in which an annular groove is formed that is filled with a nonvolatile getter agent and the container is covered with a blackened heat absorbing material.

WO 2005075900 A discloses an evacuable flat panel solar collector comprising a transparent planar wall, a perimetric frame, spacers and absorber plates. The solar collector further comprises at least one lumped getter, for instance nonevaporable getter, on at least part of the absorber and/or the holding structure.

US 2004134484 A discloses a getter support assembly for supporting getters in a focusing collector type solar collector system comprising a tube radiation absorber and a glass enclosure tube. The getter support assembly comprises a bridge formed with an elongated trough having a getter support portion. The bridge further comprising feet fixedly attached to the tube radiation absorber supporting the trough.

The technical aim of the present invention is therefore to provide an evacuated solar panel with a NEG pump by which the said problems of the known art are eliminated.

Within the scope of this technical aim, an object of the invention is to provide a solar panel which is cheap when compared to the solar panels of the known art.

Another object of the invention is to provide a solar panel which is very reliable.

The technical aim, together with these and further objects, are attained according to the invention by providing an evacuated solar panel with a NEG pump in accordance with the accompanying claims.

In case of solar panels solar heating is freely available and the non evaporable getter pump is contained in a volume enclosed by selectively blackened walls, so as to effectively absorb the solar light and reach the temperature required for gas diffusion. This temperature varies for different NEG pumps and operating pressures, but in all cases it should not be lower than about 180°C.

Further characteristics and advantages of the invention will be more apparent from the description of a preferred but non-exclusive embodiment of the evacuated solar panel with a getter pump according to the invention, illustrated by way of non-limiting example in the accompanying drawings, in which:
Figure 1 is a schematic view of a portion of a solar panel having a getter pump according to the invention;
Figure 2 is a prospective view of a getter pump of the solar panel according to the invention;
Figure 3 shows an exemple of a solar panel with a getter pump ; and

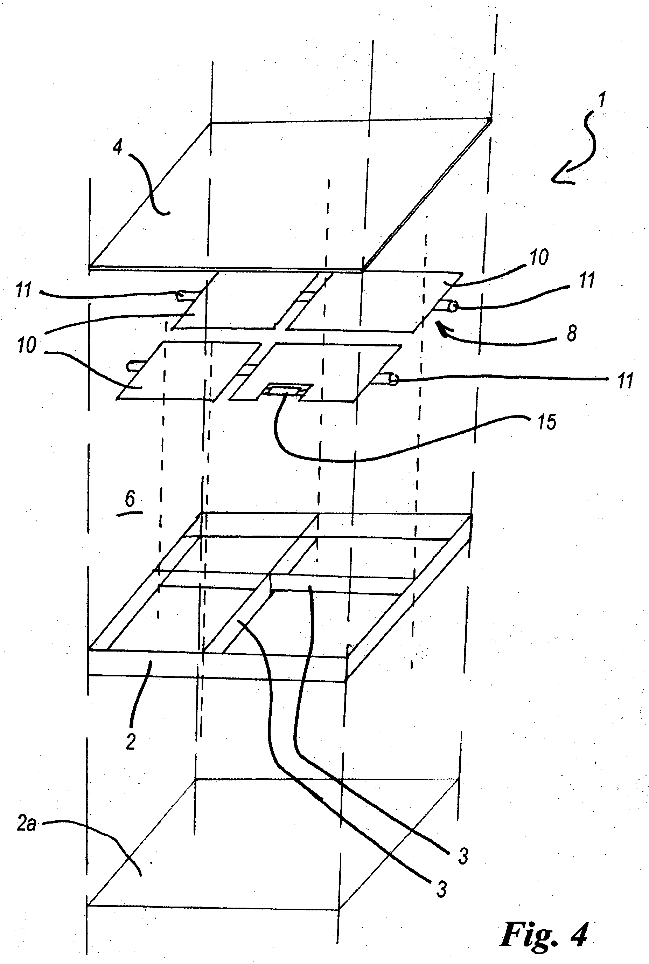

Figure 4 schematically shows a solar panel having the getter pump of the invention.

With reference to the figures, these show an evacuated solar panel generally indicated by the numeral reference 1.

The solar panel 1 comprises a frame 2 which generally carries a plurality of spacers 3 carrying an upper transparent glass wall 4 and a back lower wall 2a made of a metal or of a glass sheet.

The frame 2 with the transparent wall 4 and the back wall 2a defines a closed chamber 6 containing the spacers 3 and an absorber 8.

As known in the art the absorber 8 comprises one or more absorbing panels 10 and one or more cooling pipes 11 connected thereto.

The chamber 6 also contains a NEG pump 15 which comprises an envelope having outer selectively blackened surface 16 and including therein one or more non-evaporable getter elements.

The envelope has a box-like shape and has preferably one through opening 18 for keeping the inner volume of the box-like envelope in contact with the outside (i.e. with the chamber 6 of the box-like envelope.

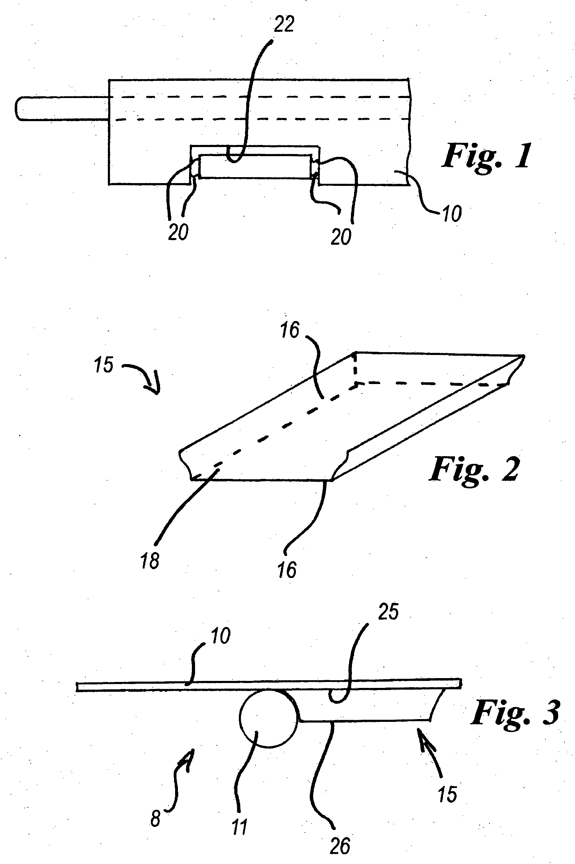

Different opening geometries could also be envisaged. According to the invention, the envelope is thermally independent of the solar panel (figure 1).

In this respect the envelope is provided with thermally insulating connecting elements 20 to the absorber (i.e. to the absorbing panel 10) or to the frame 2 or to the spacers 3 of the solar panel 1.

Thus the non-evaporable getter pump is suspended via springs to minimize the thermal conduction to the anchoring points, which could then be warm (absorber) or cold (panel frame or spacers) so as to largely exceed 180°C in good insolation conditions, no matter what panel operating temperature is chosen.

These thermally insulating connecting elements 20 comprise metal springs or wires.

In particular, the absorbing panel 10 defines a cavity 22 wherein the envelope is inserted.

In the exemple of figure 3, the envelope is thermally in contact with the absorber.

In this respect the absorbing plate 10 of said absorber 8 defines at least one wall 25 of the envelope which contains the NEG elements, an opposite wall 26 of this envelope being defined by a plate connected mechanically or welded to the absorbing panel.

This configuration may be advantageously used when the operating absorber temperature exceeds 180°C, nevertheless it may also be adopted for lower operating temperatures, provided that the circulation of the cooling fluid be intermittently stopped so as to let the absorber temperature increase to higher values (to regenerate the getter pump). This operating mode may turn out to be very helpful if existing panels must be adapted for a different use.

In this respect the solar panel of the invention comprises a control system arranged for intermittently stopping the circulation of the cooling fluid within the cooling pipe.

Advantageously both non-evaporable getter pumping speed and the gas load increase in phase with the increase of the incident solar power.

The embodiment above described is provided with two transparent walls, i.e. the transparent wall 4 and the back wall 2a whenever preferably used in connection with reflecting mirrors.

A different embodiment (to be used without such reflecting mirrors) may have the transparent back wall 2a replaced by a metal wall.

The solar panel with a getter pump conceived in this manner is susceptible to numerous modifications and variants, all falling within the scope of the inventive concept; moreover all details can be replaced by technically equivalent elements.

In practice the materials used and the dimensions can be chosen at will according to the requirements and to the state of the art.

## Claims

1. Evacuated solar panel (1) with a getter pump (15), said evacuated solar panel comprising: a frame (2), a plurality of spacers (3), at least a transparent wall (4) and an absorber (8), said frame (2) carrying said plurality of spacers (3) carrying said transparent wall (4), said transparent wall (4) defining with said frame (2) a closed chamber (6) containing said spacers (4) and said absorber (8) and said getter pump (15), said getter pump (15) comprising an envelope including one or more non evaporable getter elements **characterised in that** said envelope has outer selectively blackened surfaces (16) so as to effectively absorb the solar light and reach the temperature required for gas diffusion, and **in that** said envelope is thermally independent of said solar panel (1).

2. Evacuated solar panel as claimed in claim 1, **characterised in that** said envelope has a box-like shape and has at least one through opening (18) for keeping the inner volume of the box-like envelope in contact with the outside of the box-like envelope.

3. Evacuated solar panel as claimed in claim 1, **characterised in that** said envelope is provided with thermally insulating connecting elements (20) to the absorber or to the frame or to the spacers of the solar panel.

4. Evacuated solar panel as claimed in any of the preceding claims, **characterised in that** said thermally insulating connecting elements comprise springs.

5. Evacuated solar panel as claimed in any of the preceding claims, **characterised in that** said absorber comprises one or more absorbing panels and one or more cooling pipes (11) connected thereto, the absorbing panel defining a cavity where said envelope is inserted.

6. Evacuated solar panel as claimed in any of the preceding claims, **characterised by** further comprising a control system arranged for intermittently stopping the circulation of the cooling fluid within the cooling pipe.

## Patentansprüche

1. Evakuiertes Sonnenpaneel (1) mit Getter-Pumpe (15), wobei das genannte evakuierte Sonnenpaneel umfasst: einen Rahmen (2), eine Vielzahl von Abstandhalter (3), mindestens eine durchsichtige Wand (4) und einen Absorber (8), wobei der genannte Rahmen (2) die genannte Vielzahl von die genannte durchsichtige Wand (4) tragenden Abstandhaltern (3) trägt, wobei die durchsichtige Wand (4) mit dem genannten Rahmen (2) eine geschlossene Kammer (6) bestimmt, die die genannten Abstandhalter (4) und den genannten Absorber (8) und die genannte Getter-Pumpe (15) enthält, wobei die genannte Getter-Pumpe (15) eine ein oder mehrere nicht vardampfbare Getter Elemente umfassende Hülle umfasst, **dadurch gekennzeichnet, dass** die genannte Hülle selektiv geschwärzte Außenflächen (16) aufweist, so dass sie die Sonnenlicht wirksam aufnimmt und die erforderliche Temperatur zur Gasdiffusion erreich, und dass die genannte Hülle von dem genannten Sonnenpaneel thermisch unabhängig ist(1).

2. Evakuiertes Sonnenpaneel (1) nach Anspruch 1, **dadurch gekennzeichnet, dass** die genannte Hülle kastenförmig ist und mindestens eine Durchöffnung (18) zur Aufrechterhaltung des Kontakts zwischen dem Innenumfang der kastenförmigen Hülle und der Außenfläche der kastenförmigen Hülle hat.

3. Evakuiertes Sonnenpaneel (1) nach Anspruch 1, **dadurch gekennzeichnet, dass** die genannte Hülle mit thermisch isolierenden Elementen (20) zur Verbindung mit dem Absorber oder mit dem Rahmen oder mit den Abstandhaltern des Sonnenpaneels versehen ist.

4. Evakuiertes Sonnenpaneel (1) nach dem vorherigen Anspruch, **dadurch gekennzeichnet, dass** die thermisch isolierenden Verbindungselemente Feder umfassen.

5. Evakuiertes Sonnenpaneel (1) nach irgendeinem der vorangegangenen Ansprüche, **dadurch gekennzeichnet, dass** der genannte Absorber ein oder mehrere absorbierende Paneele sowie ein oder mehrere damit verbundene Kühlrohre (11) umfasst, wobei das absorbierende Paneel eine Ausnehmung bestimmt, worin die genannte Hülle eingefügt ist.

6. Evakuiertes Sonnenpaneel (1) nach irgendeinem der vorangegangenen Ansprüche, **dadurch gekennzeichnet, dass** es ein Steuerungssystem weiter umfasst, das derart angeordnet ist, dass es die Umwälzung der Kühlflüssigkeit in dem Kühlrohr intermittierend absperrt.

## Revendications

1. Panneau solaire sous vide (1) avec pompe à adsorption chimique (15), ledit panneau solaire sous vide comprenant: un cadre (2), une pluralité d'éléments d'espacement (3), au moins une paroi transparente (4) et un absorbeur (8), ledit cadre (2) portant ladite pluralité d'éléments d'espacement (3) portant ladite paroi transparente (4), ladite paroi transparente (4) définissant avec ledit cadre (2) une chambre fermée (6) contenant lesdits éléments d'espacement (4) et ledit absorbeur (8) et ladite pompe à adsorption chimique (15), ladite pompe à adsorption chimique (15) comprenant une enveloppe incluant un ou plusieurs éléments à adsorption chimique non évaporables, **caractérisé en ce que** ladite enveloppe a des surfaces externes assombries de façon sélective (16), de façon à absorber efficacement la lumière solaire et atteindre la température nécessaire pour la diffusion du gaz, et **en ce que** ladite enveloppe est thermiquement indépendante dudit panneau solaire (1).

2. Panneau solaire sous vide selon la revendication 1, **caractérisé en ce que** ladite enveloppe a une forme de boîte et a au moins une ouverture traversante (18) pour maintenir le volume interne de l'enveloppe en forme de boîte en contact avec l'extérieur de l'enveloppe en forme de boîte.

3. Panneau solaire sous vide selon la revendication 1, **caractérisé en ce que** ladite enveloppe est pourvue d'éléments thermiquement isolants (20) de connexion avec l'absorbeur ou avec le cadre ou avec les éléments d'espacement du panneau solaire.

4. Panneau solaire sous vide selon l'une quelconque des revendications précédentes, **caractérisé en ce que** lesdits éléments thermiquement isolants de connexion comprennent des ressorts.

5. Panneau solaire sous vide selon l'une quelconque des revendications précédentes, **caractérisé en ce que** ledit absorbeur comprend un ou plusieurs panneaux absorbants et un ou plusieurs tuyaux de refroidissement (11) connectés à celui-ci, le panneau absorbant définissant une cavité où ladite enveloppe est introduite.

6. Panneau solaire sous vide selon l'une quelconque des revendications précédentes, **caractérisé en ce qu'**il comprend aussi un système de contrôle agencé pour arrêter par intermittence la circulation du fluide de refroidissement à l'intérieur du tuyau de refroidissement.
